Europäisches Patentamt

European Patent Office

Office européen des brevets

(19)

(11) Numéro de publication: **0 266 262**
**B1**

(12) **FASCICULE DE BREVET EUROPEEN**

(45) Date de publication du fascicule du brevet:
**11.07.90**

(21) Numéro de dépôt: **87402324.5**

(22) Date de dépôt: **16.10.87**

(51) Int. Cl.⁵: **F16D 55/32**, F16D 55/224,
F16D 65/12, F16D 3/06,
F16C 29/04

(54) Frein multidisques.

(30) Priorité: **29.10.86 FR 8615044**

(43) Date de publication de la demande:
**04.05.88 Bulletin 88/18**

(45) Mention de la délivrance du brevet:
**11.07.90 Bulletin 90/28**

(84) Etats contractants désignés:
**DE ES GB IT**

(56) Documents cités:
**EP-A- 0 117 192**
**EP-A- 0 130 883**
**EP-A- 0 143 708**
**DE-A- 3 124 927**
**FR-A- 1 266 350**
**FR-A- 1 374 262**
**FR-A- 2 311 958**

(73) Titulaire: **BENDIX France Société Anonyme dite:,**
**126, rue de Stalingrad, F-93700 Drancy(FR)**

(72) Inventeur: **Fargier, Eric, 13, Avenue du Maréchal Foch,**
**F-93360 Neuilly-Plaisance(FR)**
Inventeur: **Mery, Jean-Claude, 61, rue Emile Zola,**
**F-93320 Pavillons Sous Bois(FR)**

(74) Mandataire: **Luziau, Roland et al, Division Technique**
**Service Brevets Bendix Europe 126, rue de Stalingrad,**
**F-93700 Drancy(FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention se rapporte à un frein multidisques comprenant un premier disque rotatif solidaire d'un moyeu qui est relié à un organe tournant à freiner et au moins un second disque rotatif susceptible de coulisser axialement par rapport au moyeu et au premier disque tout en étant rendu solidaire en rotation du premier disque, les axes du moyeu et desdits disques étant confondus, ainsi qu'un ensemble de patins de friction comportant des garnitures de friction susceptibles d'être appliquées sur les faces des disques par un dispositif d'actionnement.

On connaît déjà, par le document EP-A-130883, un frein multidisques dans lequel le second disque est porté par un manchon cannelé intérieurement qui peut coulisser sur une partie du moyeu cannelée extérieurement, l'engrènement mutuel de ces cannelures assurant l'entraînement en rotation du second disque par le moyeu. Afin de réduire les effets du jeu existant inévitablement entre les cannelures du manchon et du moyeu et pouvant entraîner un claquement causé par la brusque venue en contact des flancs des cannelures qui travaillent durant le freinage pour transmettre le couple de ralentissement du second disque au moyeu, on a proposé de prévoir un agencement développant entre le manchon et le moyeu un couple qui les sollicite autour de leur axe commun dans un sens tel qu'il tende à mettre en appui mutuel les flancs des cannelures du moyeu et du manchon par lesquels se transmet l'effort de freinage au moyeu. L'agencement créateur de couple comprend au moins un élément élastique, par exemple un bloc de caoutchouc mis en expansion par une cheville interne à l'intérieur d'un logement.

Une telle mise en précontrainte des cannelures a permis d'éviter les claquements entre flancs au moment de l'application du frein et en cas d'inversion du sens de freinage. Par contre, lors d'essais de longue durée, il s'est avéré que soit l'élément élastique perdait peu à peu son élasticité, soit des cannelures tendaient à se gripper par suite d'un trop long séjour sous vibrations dans la même position et le second disque rotatif ne coulissait plus de façon vraiment libre par rapport au premier. Ces défauts se manifestaient après une longue durée de service par des usures anormales de certains flancs des disques et de certains des patins de friction.

L'un des buts de la présente invention est précisément de proposer un frein multidisques dont le deuxième disque présente une mobilité par rapport au premier disque et au moyeu qui est à la fois plus importante et moins sensible à l'échauffement et qui se maintient mieux dans le temps car elle fait appel à des principes de roulement. Un autre but de l'invention est d'obtenir ce résultat avec des moyens relativement simples, peu onéreux et aisés à mettre en oeuvre pour une production en grande série.

A cet effet, selon l'invention, un premier manchon de guidage axial solidaire du premier disque est disposé coaxialement à un deuxième manchon de guidage axial solidaire du deuxième disque et est relié directement ou indirectement à ce deuxième manchon par l'intermédiaire de plusieurs chemins de guidage axial qui sont répartis angulairement sur les manchons, les chemins de guidage comportant des surfaces de roulement conjuguées entre lesquelles sont interposés des organes de roulement. Les organes de roulement sont constitués par des galets ou aiguilles de faible diamètre disposés transversalement à l'axe de coulissement du deuxième manchon.

Selon un autre mode de réalisation, les chemins de guidage sont du type rainure-saillie et les faces de chaque rainure ménagée sur l'un des manchons coopèrent, pour la transmission du couple de freinage au deuxième disque, avec les faces opposées d'une nervure axiale en saillie conjuguée ménagée sur l'autre manchon pour former des surfaces de roulement disposées en V en section transversale. La forme en V des faces de chaque rainure permet de transmettre des couples importants en provenance du deuxième disque tout en assurant, de facon compacte, le coulissement axial du deuxième disque sur les organes de roulement et un bon centrage du deuxième manchon par rapport au premier. Les deux branches du V peuvent présenter des inclinaisons différentes, la branche la moins inclinée et la plus proche de la position radiale étant celle qui établit le contact de transmission de couple au cours du freinage dans le sens habituel, par exemple pour un véhicule en marche avant.

Selon un mode de réalisation avantageux, les rainure en V sont ménagées sur la surface extérieure du manchon intérieur et les rainures axiales en V sont ménagées ou rapportées sur la surface intérieure du manchon extérieur. Les surfaces de roulement des rainures et/ou des ner vures axiales sont alors formées d'un matériau rapporté sur le manchon correspondant et présentant une grande dureté et/ou résistance à l'abrasion. Chaque nervure peut être constituée par une languette ou barrette rapportée dans une rainure ou un appui axial ménagé dans le manchon ou bien par une languette ou barrette disposée dans une rainure peu profonde ou un appui axial et maintenue en position axiale par des pions cylindriques engagés dans des alésages ménagés dans le manchon qui porte la languette. Au moins une rondelle élastique peut être disposée autour des pions d'au moins l'une des languettes ou barrettes et interposée entre cette languette et l'appui axial ménagé dans le manchon.

Selon encore un autre mode de réalisation, les chemins de guidage comportent une surface de roulement ménagée sur un des manchons selon une disposition (en coupe transversale) tangentielle à la périphérie circulaire du manchon, et une surface de roulement conjuguée ménagée sur une bague ou fourreau monté sur l'autre manchon et des éléments de transmission de couple disposés entre les deux manchons pour rendre ces derniers solidaires en rotation, traversent radialement des ouvertures ménagées dans la bague et présentent des dimensions évitant toute interférence entre les éléments de transmission de couple et la bague. Les éléments de transmission de couple sont constitués par des pions radiaux logés dans un alésage ménagé dans le manchon extérieur et se projetant dans une rainure axiale correspondante du manchon intérieur avec un jeu fonctionnel.

L'un des pions radiaux se projette dans l'une des rainures axiales avec un jeu de montage qui est supérieur au jeu fonctionnel et à l'intérieur duquel est interposé un ressort de rattrapage qui maintient le pion en butée et qui est apte à s'écraser d'une faible valeur pour rattraper le jeu de contact, par exemple de dilatation ou d'inversion de sens de rotation de l'organe à freiner.

Selon le mode de réalisation le plus courant, le premier manchon est fixé latéralement sur le flasque du premier disque et placé à l'intérieur du deuxième manchon qui est monobloc avec le deuxième disque.

Selon un mode de réalisation étanche du frein multidisques, l'extrémité du second manchon est reliée, du côté opposé au second disque, par un premier organe annulaire souple et sensiblement étanche, par exemple une première membrane, au premier disque, tandis que l'extrémité du premier manchon intérieur au second manchon est reliée par un deuxième organe annulaire souple et sensiblement étanche, par exemple une deuxième membrane, au deuxième disque, de manière à isoler des pollutions extérieures les faces coopérantes des deux manchons. Le deuxième organe annulaire souple qui se trouve orienté vers l'extérieur est avantageusement protégé contre les chocs par une enveloppe annulaire résistante et à bord rabattu, par exemple en tôle métallique.

D'autres buts, avantages et caractéristiques apparaîtront à la lecture de la description de divers modes de réalisation de l'invention, faite à titre non limitatif et en regard du dessin annexé, où:

- la figure 1 représente en coupe axiale par un plan passant par la ligne I-I à la figure 2, un premier mode de réalisation du frein multidisques selon l'invention;
- la figure 2 représente une vue en coupe transversale selon la ligne II-II de la figure 1 des seuls manchons des disques du frein équipés de plusieurs types de liaisons en V entre les manchons;
- la figure 3 est une vue fragmentaire en coupe transversale d'un autre type de liaison en V entre les manchons;
- la figure 4 représente à plus grande échelle et en coupe axiale par un plan passant par la ligne IV-IV à la figure 5, un deuxième mode de réalisation du frein multidisques selon l'invention, les disques et l'étrier étant enlevés;
- la figure 5 est une coupe en vue transversale correspondant à la figure 4, des seuls manchons des disques de frein.

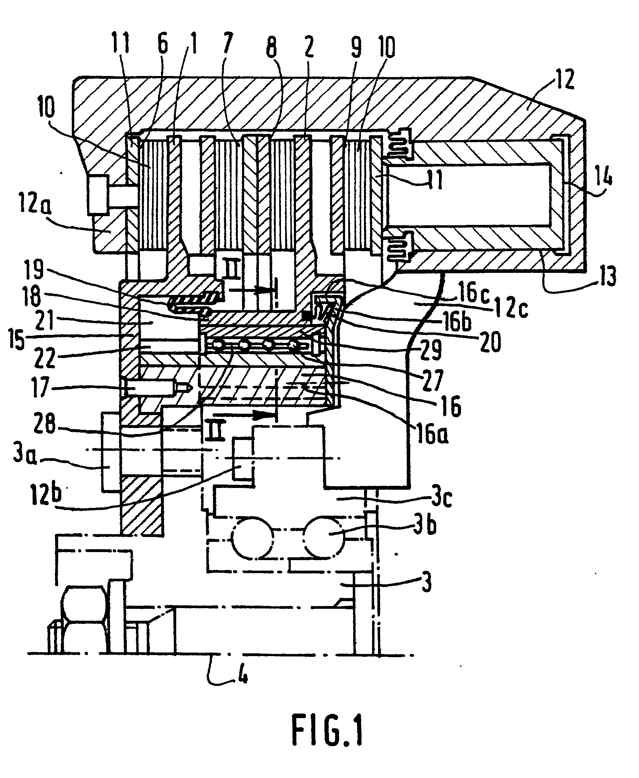

Le frein multidisques représenté sur la figure 1 comporte un premier disque rotatif 1 dit extérieur et un second disque rotatif 2 dit intérieur, tous deux rendus solidaires d'un moyeu 3 dont l'axe 4 coïncide avec ceux des disques 1 et 2. Le moyeu 3, comme les autres pièces ne faisant pas partie du frein proprement dit, est représenté en traits alternés et tourne sur un roulement à billes 3b monté à l'intérieur d'une couronne fixe 3c. Tandis que le disque 1 est rendu solidaire du moyeu 3 par une couronne de vis 3a et est donc fixe dans le direction de l'axe 4, le disque 2 peut se déplacer suivant cette direction grâce à des moyens de coulissement qui seront décrits par la suite.

Chaque disque de frein 1 ou 2 coopère avec une paire de patins de friction 6 et 7 ou 8 et 9 disposés de part et d'autre du disque de frein 1 ou 2 correspondant et susceptibles d'être appliqués contre les faces latérales de celui-ci. Chacun de ces patins de friction 6, 7, 8, 9 comprend une garniture de friction 10 et une plaque porte-garniture 11, chaque garniture 10 coopérant avec la face adjacente du disque 1 ou 2 correspondant.

Un étrier 12 est fixé par des vis 12b à la couronne fixe 3c, via un porte-étrier 12c et est disposé par dessus les disques de frein 1, 2 et leurs patins de friction 6, 7, 8, 9, de facon à coiffer l'ensemble disques-patins. Dans la partie intérieure 13 de l'étrier 12, est prévu un moteur de commande tel qu'un vérin hydraulique dont le piston 14 est susceptible d'agir sur la plaque porte-garniture 11 du patin intérieur 9, et par réaction et grâce à son nez échancré 12a, sur la plaque porte-garniture 11 du patin extérieur 6, de manière à commander le serrage de l'ensemble disques-patins, suivant la direction de l'axe 4 et à faire ainsi naître la friction de freinage entre chaque garniture 10 et la face conjuguée du disque.

Cette action peut s'accompagner d'un déplacement du disque intérieur 2, parallèlement à l'axe 4, par rapport au moyeu 3. Pour cela, le premier disque 1 est relié rigidement vers son centre par un flasque 15 d'une part au moyeu 3 par la couronne de vis 3a et, d'autre part, à un premier manchon 16 par une couronne de vis 17. Le second disque 2 se prolonge axialement dans la masse par un deuxième manchon 18 qui est relié de façon sensiblement étanche par un premier soufflet annulaire 19 au pied du disque 1 et par un deuxième soufflet annulaire 20 situé du côté opposé au soufflet 19, au premier manchon 16 de manière protéger l'espace intérieur 21 d'accouplement, entre le premier et le deuxième manchons, des pollutions extérieures, telles que les poussières et graviers, les projections d'eau, etc., tout en retenant la graisse qui remplit cet espace intérieur. Le deuxième soufflet 20 est fixé au premier manchon 16 par une couronne de vis 16a et protégé contre les projections par une enveloppe annulaire rigide 16b à bord rabattu 16c, réalisée par exemple en tôle métallique emboutie.

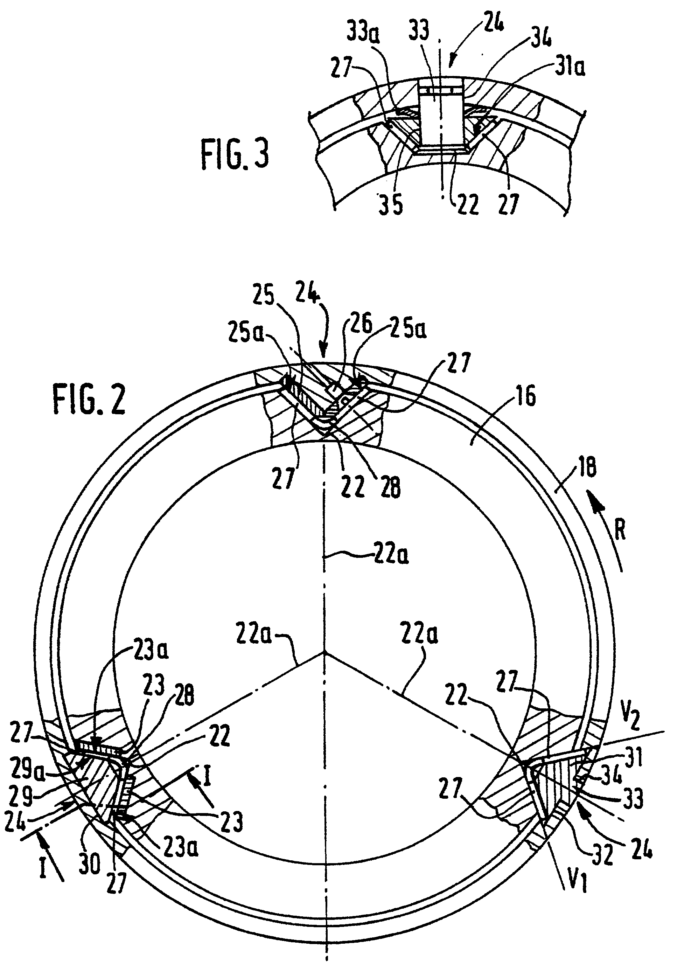

Comme on le voit mieux à la figure 2, plusieurs rainures en V 22 (trois dans le cas de la figure pour obtenir une bonne répartition des efforts avec le minimum de rainures) sont ménagées régulièrement à la périphérie du premier manchon 16 situé concentriquement au deuxième manchon 18 et à l'intérieur de celui-ci. Ces rainures 22, obtenues au moins en finition par usinage, peuvent rester brutes ou bien être munies d'une surface de roulement 23a en forme de plaquette axiale 23 rapportée sur chacune des faces du V. Pour coopérer avec les rainures 22, le deuxième manchon 18 monobloc avec le second disque 2 et qui entoure le premier manchon 16, est muni intérieurement de nervures axiales en saillie 24. Ces nervures 24 qui doivent résister au roulement et au glissement sont, soit monobloc avec le manchon 18 (en haut de la figure 2) et munies de surfaces de roulement 25a en forme de languettes 25 rapportées par des vis 26, auquel cas elles sont réalisées en un matériau tel que l'acier trempé présentant une grande dureté et une bonne résistance à l'abrasion, soit rapportées comme dans les autres modes de réalisation représentés sur les figures 2 et 3. Chaque rainure 22 et la nervure 24 correspondante constituent un chemin de guidage pour le deuxième manchon 18 solidaire du deuxième disque 2, par rapport au premier manchon 16 fixé au premier disque 1 et au moyeu 3. Des organes de roulement qui pourraient être des billes mais qui, pour des raisons de compacité et de résistance, sont constitués ici par des galets ou aiguilles 27 de faible diamètre, sont interposés entre les surfaces de roulement conjuguées de la rainure en V 22 et de la nervure 24. Les aiguilles 27 représentées sur les figures 2 et 3 présentent une faible épaisseur, sont disposées transversalement à l'axe de coulissement du deuxième manchon 18 et peuvent être portées en groupe par une cage d'écartement 28 épousant d'un bloc la forme en V des rainures 22 et des nervures 24.

Selon les diverses variantes représentées sur les figures 2 et 3, les nervures axiales 24 peuvent être constituées par une languette ou barrette axiale 29 rapportée dans une rainure axiale 30 ménagée dans le deuxième manchon et qui présente deux faces 29a formant chemin de roulement pour les galets 27. Selon la variante représentée en bas à droite de la figure 2, la languette ou barrette 31 est logée dans une rainure intérieure peu profonde 32 du manchon 18 et maintenue axialement par des pions cylindriques 33 engagés dans des alésages radiaux correspondants 34 du deuxième manchon 18. Selon la variante représentée à la figure 3, la languette 31 qui présente des chemins de roulement 31a est munie d'alésages 35 traversés par les pions 33 qui traversent également les alésages 34 ménagés dans le deuxième manchon 18. Les pions 33 se projettent jusqu'au voisinage du fond plat des rainures 22 tout en conservant un jeu de fonctionnement. Afin de permettre le rattrapage des jeux pouvant exister entre le chemin de roulement 31a de la languette 31 et les aiguilles 27, on peut interposer autour du pion 33 au moins une rondelle élastique 33a (rondelle Belleville par exemple) entre cette languette 31 et la surface iantérieure du deuxième manchon 18. Selon le mode de réalisation représenté sur les figures 2 et 3, les deux branches $V_1$ et $V_2$ du V sont également inclinées par rapport au plan radial central 22a de chaque rainure axiale 22. Afin d'améliorer la tenue en service des moyens de coulissement, il est possible de réaliser des rainures 22 à section transversale en V dont les deux branches du V présentent des inclinaisons différentes, la branche $V_1$ (voir la figure 2 en bas à droite) qui supporte l'effort dans le sens de marche préférentiel R (en marche avant pour un véhicule), étant la moins inclinée par rapport au plan radial central 22a et l'autre branche $V_2$ la plus inclinée.

Le fonctionnement du mode de réalisation représenté sur les figures 1 à 3 va maintenant être explicité. Lorsque l'on procède à un serrage des freins, le piston 14 repousse la plaque 11 et la garniture 10 correspondante au contact de la première piste de friction du second disque 2 et celui-ci se déplace axialement par coulissement du deuxième manchon 18 par rapport au premier manchon 16 avec roulement des aiguilles 27 entre les deux faces opposées respectives de la nervure 24 et de la rainure 22 jusqu'à ce que la deuxième piste de friction du second disque 2 vienne en contact avec la garniture de friction 10 du patin 8 qui repousse, à son tour, le patin 7 au contact de la première piste de friction du premier disque 1. Par réaction, l'étrier 12 tire alors la plaque 11 du dernier patin 6 en direction de la deuxième piste de friction du premier disque 1 et les deux disques de frein 1 et 2 sont serrés simultanément par les quatre garnitures de friction 10.

Si un coincement se produisait entre les surfaces opposées des rainures 22 et des nervures 24, le portage des garnitures de friction 10 serait irrégulier et certaines s'useraient plus vite que d'autres. Un tel coincement est évité dans le temps du fait que la chambre intérieure 21, et donc tous les intervalles entre les aiguilles 27 et leurs pistes de roulement 23a et 25a, 29a, 31a, sont remplis de graisse et que le mouvement principal des aiguilles 27 est un mouvement de roulement sous charge. L'échauffement des disques 1 et 2 ne se transmet que faiblement aux manchons 16 et 18 qui peuvent être partiellement découplés thermiquement (ou isolés) par rapport aux surfaces de roulement des rainures et nervures en V. La graisse remplissant l'espace intérieur 21 peut, par ailleurs, présenter une grande résistance à l'échauffement (graisse au silicone). On notera que la position des rainures 22 et des nervures 24 peut être inversée par rapport aux manchons 16 et 18.

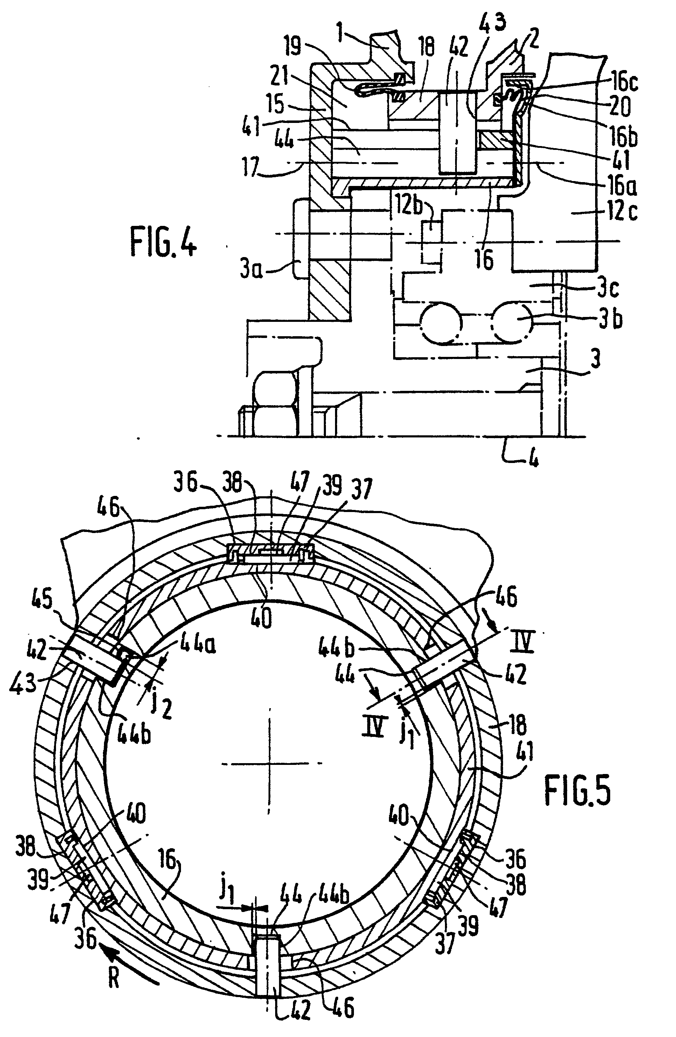

Sur les figures 4 et 5, les éléments qui se retrouvent sur le premier mode de réalisation, sont dotés des mêmes références. Des rainures axiales 36 régulièrement réparties (ici au nombre de trois) sont formées à l'intérieur du manchon extérieur 18 et recouvrent, chacune, une barrette longitudinale 37 engagée à force et qui présente une surface de roulement axial 38 destinée à recevoir un jeu de galets ou aiguilles de roulement 39. Chaque rainure axiale 36 et la surface de roulement axial 38 correspondante constituent un chemin de guidage pour le second manchon 18 par rapport au premier manchon 16. La surface de roulement 38 est disposée tangentiellement à la périphérie circulaire du manchon et les aiguilles 39 viennent en contact, en face, avec une surface de roulement 40 ménagée sur une bague ou fourreau 41 monté sur le manchon intérieur 16 rendu solidaire par des vis 17 (non représentées) du flasque 15 du premier disque 1. La surface de roulement 40 est formée par un simple méplat axial usiné à la surface de la bague 41 présentant une grande dureté et une bonne résistance à l'abrasion, par exemple en acier dur trempé. La bague 41 est montée libre sur le manchon intérieur 16 et est maintenue en position par la pression des aiguilles 39 sur les chemins de roulement 40.

Ce montage des surfaces de guidage axial à section transversale tangentielle à la périphérie circulaire des manchons assure un excellent guidage axial sans pour autant transmettre le couple de freinage du second disque 2. Pour assurer cette dernière fonction, on prévoit des éléments de transmission de couple tels que des pions radiaux 42, ici au nombre de trois et régulièrement répartis entre les surfaces de roulement 40, qui sont logés respectivement dans un alésage 43 du manchon extérieur 18 (second manchon) et dans une rainure axiale 44 du manchon intérieur 16 (premier manchon). La rainure 44 ne débouche pas au fond du manchon 16 afin de permettre à celui-ci de se refermer de façon plus résistante et de retenir le pion 42. Deux rainures 44 reçoivent le pion 42 correspondant avec un léger jeu fonctionnel $j_1$ tandis que la rainure 44a de l'un des pions 42 reçoit celui-ci avec un jeu de montage plus important $j_2$ pour loger un ressort à lame 45 de rattrapage de jeu. Les pions 42 traversent radialement la bague ou fourreau de roulement 41 à travers une ouverture axiale 46 dont la largeur est plus grande que le diamètre de ces pions qui ne viennent ainsi jamais en contact avec cette bague 41. Cette disposition permet à la bague 41 de venir au contact des aiguilles 39 tout en étant libre en rotation, ce qui rend la transmission du couple indépendante de l'agencement des disques et évite toute transmission de couple via les aiguilles pour réduire les risques de coincement. Afin d'assurer un meilleur contact avec les flancs latéraux des rainures 44 et 44a, la partie du pion 42 engagée dans cette rainure peut présenter un méplat de contact ou bien une section carrée ou rectangulaire dans la zone de contact avec la rainure.

Lorsque le moyeu freiné 3 tourne dans son sens préférentiel R (marche avant pour un véhicule) et que l'on déclenche le serrage des freins, les pions 42 repoussés par le ressort 45 en appui sur les faces 44b de la rainure 44 transmettent sans jeu le couple de retenue du disque de frein 2 au manchon intérieur 16 et au flasque 15 du premier disque 1 solidaire du moyeu 3. Au cours de l'usure des garnitures de friction 10 non représentées sur la figure 4, le second disque 2 est repoussé progressivement vers la gauche de la figure 4 et les barrettes longitudinales 37 se déplacent par rapport aux surfaces de roulement 40, fixes dans le sens axial sur la bague 41, en faisant rouler les aiguilles 39.

Lorsque le moyeu freiné 3 tourne dans le sens opposé à son sens préférentiel R, c'est-à-dire en marche arrière pour un véhicule, et que l'on déclenche un freinage, le couple de retenue du disque 2 inverse les forces tangentielles exercées sur les pions 42 qui rattrapent le jeu $j_1$ en écrasant un peu le ressort à lame 45, ce qui réduit le jeu $j_2$. Le contact s'établit alors seulement sur deux pions 42, ce qui est suffisant pour transmettre le couple, étant donné que le freinage est rarement exercé dans le sens contraire au sens préférentiel. Le ressort 45 évite tout claquement de contact des pions 42 avec les faces latérales des rainures 44.

L'espace intérieur 21 délimité par les soufflets annulaires 19 et 20 et comportant les chemins de guidage constitués des aiguilles 39 et de leurs chemins de roulement 38, 40, est rempli de graisse résistante à l'échauffement, comme dans le premier mode de réalisation des figures 1 à 3. On remarque que le chemin de roulement 38 des barrettes 37 présente une rainure centrale 47 formant réserve de graisse car celle-ci ne peut pas être chassée de cette rainure 47 par la centrifugation causée par la rotation du manchon extérieur 18.

Le manchon intérieur 16 allongé pourrait recevoir d'autres manchons extérieurs 18 portant d'autres disques de frein en supplément du second disque 2, les pieds des disques voisins étant reliés entre eux par des soufflets d'étanchéité analogues au soufflet 20 et l'étrier 12 venant coiffer l'ensemble des disques.

**Revendications**

1.- Frein multidisques comprenant un premier disque (1) rotatif solidaire d'un moyeu (3) qui est relié à un organe tournant à freiner et au moins un second disque (2) rotatif susceptible de coulisser axialement par rapport au moyeu et au premier disque tout en étant rendu solidaire en rotation du premier disque, les axes (4) du moyeu et desdits disques étant confondus, ainsi qu'un ensemble de patins de friction (6, 7, 8, 9) comportant des garnitures de friction (10) susceptibles d'être appliquées sur les faces des disques par un dispositif d'actionnement, caractérisé en ce qu'un premier manchon de guidage axial (16) solidaire du premier disque (1) est disposé coaxialment à un deuxième manchon de guidage axial (18) solidaire du deuxième disque (2) et est relié directement ou indirectement à ce deuxième disque (2) et est relié directement ou indirectement à ce deuxième (18) par l'intermédiaire de plusieurs chemins de guidage axial (22-24, 38-40) qui sont régulièrement répartis angulairement sur les manchons, les chemins de guidage comportant des surfaces de roulement conjuguées (23a, 25a, 29a, 31a, 38, 40), entre lesquelles sont interposés des organes de roulement (27, 39).

2.- Frein multidisques selon la revendication 1, caractérisé en ce que les organes de roulement sont constitués par des galets ou aiguilles (27, 39) de faible diamètre disposés transversalement à l'axe de coulissement (4) du deuxième manchon (18).

3.- Frein multidisques selon la revendication 1 ou 2, caractérisé en ce que les chemins de guidage (22-24) sont du type rainure-saillie et en ce que les faces (23a) de chaque rainure (22) ménagée sur l'un des manchons coopèrent, pour la transmission du couple de freinage au deuxième disque (2), avec les faces opposées (25a, 29a, 31a) d'une nervure axiale en saillie conjuguée (24) ménagée sur l'autre manchon pour former des surfaces de roulement (23a, 25a, 29a, 31a) disposées en V en section transversale.

4.- Frein multidisques selon la revendication 3, caractérisé en ce que les deux branches ($V_1$, $V_2$) du V présentent des inclinaisons différentes, la branche la moins inclinée ($V_1$) et la plus proche de la position radiale (22a) étant celle qui établit le contact de transmission de couple au cours du freinage dans le sens habituel, par exemple pour un véhicule en marche avant.

5.- Frein multidisques selon la revendication 3 ou 4, caractérisé en ce que les rainures en V (22) sont ménagées sur la surface extérieure du manchon intérieur (16) et les nervures axiales en V (24) sont ménagées ou rapportées sur la surface intérieure du manchon extérieur (18).

6.- Frein multidisques selon l'une des revendications 3 à 5, caractérisé en ce que les surfaces de roulement (23a, 29a, 31a, 25a) des rainures (22) et/ou des nervures axiales (24) sont formées d'un matériau rapporté sur le manchon correspondant et présentant une grande dureté et/ou résistance à l'abrasion.

7.- Frein multidisques selon l'une des revendications 3 à 6, caractérisé en ce que chaque nervure (24) est constituée par une languette ou barrette (29, 31) rapportée dans une rainure ou un appui axial (30, 32) ménagé dans l'un des manchons.

8.- Frein multidisques selon l'une des revendications 3 à 7, caractérisé en ce que chaque nervure (24) est constituée par une languette ou barrette (31) disposée dans une rainure peu profonde (32) ou un appui axial du manchon et maintenue en position axiale par des pions cylindriques (33) engagés dans des alésages (34) ménagés dans le manchon qui porte la languette (31).

9.- Frein multidisques selon la revendication 8 caractérisé en ce qu'au moins une rondelle élastique (33a) est disposée autour des pions (33) d'au moins l'une des languettes ou barrettes (31) et interposée entre cette languette et l'appui axial ménagé dans le manchon.

10.- Frein multidisques selon l'une des revendications 1 ou 2 caractérisé en ce que les chemins de guidage (38-40) comportent une surface de roulement (38) ménagée sur un des manchons (18) selon une disposition (en coupe transversale) tangentielle à la périphérie circulaire du manchon, et une surface de roulement conjuguée (40) ménagée sur une bague ou fourreau (41) monté sur l'autre manchon (16) et en ce que des éléments de transmission de couple (42) disposés entre les deux manchons (16, 18) pour rendre ces derniers solidaires en rotation, traversent radialement des ouvertures (46) ménagées dans la bague (41) et présentent des dimensions évitant toute interférence entre les éléments de transmission de couple (42) et la bague (41).

11.- Frein multidisques selon la revendications 10, caractérisé en ce que les éléments de transmission de couple sont constitués par des pions radiaux (42) logés dans un alésage (43) ménagé dans le manchon extérieur (18) et se projetant dans une rainure axiale correspondante (44) du manchon intérieur (16) avec un jeu fonctionnel (j1).

12.- Frein multidisques selon la revendication 11, caractérisé en ce que l'un des pions radiaux (42) se projette dans l'une des rainures axiales (44) avec un jeu de montage (j2) qui est supérieur au jeu fonctionnel (j1) et à l'intérieur duquel est interposé un ressort de rattrapage (45) qui maintient les pions (42) en butée et qui est apte à s'écraser d'une faible valeur pour rattraper des jeux de contact, par exemple de dilatation ou d'inversion de sens de rotation de l'organe à freiner.

13.- Frein multidisques selon l'une des revendications 1 à 12, caractérisé en ce que le premier manchon (16) est fixé latéralement sur le flasque (15) du premier disque (1) et est placé à l'intérieur du deuxième manchon (18) qui est monobloc avec le deuxième disque (2).

14.- Frein multidisques selon l'une des revendications 1 à 13, caractérisé en ce que l'extrémité du second manchon (18) est reliée, du côté opposé au second disque (2), par un premier organe annulaire souple et sensiblement étanche, par exemple une première membrane (19) au premier disque (1), tandis que l'extrémité du premier manchon (16) est reliée, du côté opposé au premier disque (1), par un deuxième organe annulaire souple et sensiblement étanche, par exemple une deuxième membrane (20), au deuxième disque (2), de manière à isoler des pollutions extérieures les faces coopérantes des deux manchons (16, 18).

15.- Frein multidisques selon la revendication 14, caractérisé en ce que le deuxième organe annulaire souple (20) est protégé contre les chocs par une enveloppe annulaire résistante (16b) à bord rabattu (16c), par exemple en tôle métallique emboutie.

**Claims**

1. Multiple disc brake comprising a first rotary disc (1) fixed to a hub (3) connected to a rotating member to be braked and at least one second rotary disc (2) capable of sliding axially relative to the hub and to the first disc, whilst at the same time being made integral in terms of rotation with the first disc, the axes (4) of the hub and of the said discs coinciding with one another, and a set of friction blocks (6, 7, 8, 9) having friction linings (10) capable of being laid against the faces of the discs by means of an actuating device, characterized in that a first axial guide sleeve (16) fixed to the first disc (1) is arranged coaxially relative to a second axial guide sleeve (18) fixed to the second disc (2) and is connected directly or indirectly to this second sleeve (18) by means of several axial guide tracks (22-24, 38-40) which are uniformly distributed angularly over the sleeves, the guide tracks having matching rolling surfaces (23a, 25a, 29a, 31a, 38, 40), between which rolling members (27, 39) are interposed.

2. Multiple disc brake according to claim 1, characterized in that the rolling members consist of rollers or needles (27, 39) of small diameter, arranged transversely relative to the sliding axis (4) of the second sleeve (18).

3. Multiple disc brake according to claim 1 or 2, characterized in that the guide tracks (22-24) are of the groove/projection type, and in that the faces (23a) of each groove (22a) which is made in one of the sleeves interact, for transmitting the braking torque to the second disc (2), with the opposite faces (25a, 29a, 31a) of a matching projecting axial rib (24) made on the other sleeve, in order to form rolling surfaces (23a, 25a, 29a, 31a) arranged in the form of a V, as seen in cross-section.

4. Multiple disc brake according to claim 3, characterized in that the two branches (V₁, V₂) of the V have different inclinations, the branch of lesser inclination (V₁) and nearest the radial position (22a) being that which makes the torque-transmitting contact during braking in the usual direction, for example forwards for a vehicle.

5. Multiple disc brake according to claim 3 or 4, characterized in that the V-shaped grooves (22) are made in the outer surface of the inner sleeve (16), and the V-shaped axial ribs (24) are made on or attached to the inner surface of the outer sleeve (18).

6. Multiple disc brake according to any of claims 3 to 5, characterized in that the rolling surfaces (23a, 29a, 31a, 25a) of the grooves (22) and/or of the axial ribs (24) are formed from a material attached to the corresponding sleeve and having a high hardness and/or abrasion resistance.

7. Multiple disc brake according to any of claims 3 to 6, characterized in that each rib (24) consists of a tongue or bar (29, 31) fitted in a groove or an axial support (30, 32) formed in one of the sleeves.

8. Multiple disc brake according to any of claims 3 to 7, characterized in that each rib (24) consists of a tongue or bar (31) arranged in a shallow groove (32) or an axial support of the sleeve and held in the axial position by means of cylindrical studs (33) engaged in bores (34) made in the sleeve carrying the tongue (31).

9. Multiple disc brake according to claim 8, characterized in that at least one elastic washer (33a) is arranged round the studs (33) of at least one of the tongues or bars (31) and is interposed between this tongue and the axial support formed in the sleeve.

10. Multiple disc brake according to either of claims 1 or 2, characterized in that the guide tracks (38–40) comprise a rolling surface (38) formed on one of the sleeves (18) according to an arrangement (as seen in cross-section) tangential to the circular periphery of the sleeve, and a matching rolling surface (40) formed on a ring or bush (41) mounted on the other sleeve (16), and in that torque-transmitting elements (42) arranged between the two sleeves (16, 18) in order to make these integral with one another in terms or rotation pass radially through orifices (46) made in the ring (41) and have dimensions which prevent any interference between the torque-transmitting elements (42) and the ring (41).

11. Multiple disc brake according to claim 10, characterized in that the torque-transmitting elements consist of radial studs (42) which are accommodated in a bore (43) made in the outer sleeve (18) and which project into a corresponding axial groove (44) of the inner sleeve (16) with a functional play (j1).

12. Multiple disc brake according to claim 11, characterized in that one of the radial studs (42) projects into one of the axial grooves (44) with an assembly play (j2) which is greater than the functional play (j1) and within which is inserted a compensating spring (45) which keeps the studs (42) in abutment and which can be compressed a small amount in order to compensate contact play, for example that resulting from expansion or from the reversal of the direction of rotation of the member to be braked.

13. Multiple disc brake according to any of claims 1 to 12, characterized in that the first sleeve (16) is fastened laterally to the flange (15) of the first disc (1) and is placed inside the second sleeve (18) which is in one piece with the second disc (2).

14. Multiple disc brake according to any of claims 1 to 13, characterized in that the end of the second sleeve (18) is connected, on the opposite side to the second disc (2), to the first disc (1) by means of first flexible and substantially leak-proof annular member, for example a first diaphragm (19), whilst the end of the first sleeve (16) is connected, on the opposite side to the first disc (1), to the second disc (2) by means of a second flexible and substantially leak-proof annular member, for example a second diaphragm (20), so as to isolate the interacting faces of the two sleeves (16, 18) from external pollution.

15. Multiple disc brake according to claim 14, characterized in that the second flexible annular member (20) is protected against shocks by means of a resistant annular casing (16) having a turned-down edge (16c) and made, for example, of stamped sheet metal.

**Patentansprüche**

1. Mehrscheibenbremse mit einer ersten Bremsscheibe (1), die drehfest mit einer Nabe (3) verbunden ist, welche an einem abzubremsenden umlaufenden Teil befestigt ist und mindestens einer zweiten Bremsscheibe (2), die bezüglich der Nabe und der ersten Bremsscheibe axial verschiebbar ist, während sie mit der ersten Bremsscheibe drehfest verbunden bleibt, wobei die Achsen (4) der Nabe und der Bremsscheiben zusammenfallen, sowie einer Anordnung von Bremsbacken (6, 7, 8, 9) mit Bremsbelägen (10), die durch eine Betätigungsvorrichtung gegen die Flächen der Bremsscheiben andrückbar sind, dadurch gekennzeichnet, daß eine mit der ersten Bremsscheibe (1) fest verbundene axiale Führungshülse (16) koaxial zu einer mit der zweiten Bremsscheibe (2) fest verbundenen zweiten axialen Führungshülse (18) angeordnet und direkt oder indirekt mit dieser zweiten Führungshülse (18) über mehrere axiale Führungsbahnen (22–24, 38–40) verbunden ist, die in Umfangsrichtung gleichmäßig auf den Führungshülsen verteilt sind, wobei die Führungsbahnen sich entsprechende Rollflächen (23a, 25a, 29a, 31a, 38, 40) aufweisen, zwischen denen Wälzkörper (27, 39) angeordnet sind.

2. Mehrscheibenbremse nach Anspruch 1, dadurch gekennzeichnet, daß die Wälzkörper aus Rollen oder Nadeln (27, 39) kleinen Durchmessers bestehen, die quer zur Gleitachse (4) der zweiten Führungshülse (18) angeordnet sind.

3. Mehrscheibenbremse nach Anspruch 1 oder 2, dadurch gekennzeichnet, daß die Führungsbahnen (22–24) in Form von Nuten und Vorsprüngen ausgebildet sind und daß die Flächen (23a) jeder Nut (22), die in der einen Führungshülse gebildet ist, zur Übertragung des Bremsmomentes auf die zweite Bremsscheibe (2) mit den gegenüberliegenden Flächen (25a, 29a, 31a) einer entsprechenden vorstehenden axialen Rippe (24) zusammenwirken, die in der anderen Führungshülse gebildet ist, um Rollflächen (23a, 25a, 29a, 31a) von V-förmigem Querschnitt zu bilden.

4. Mehrscheibenbremse nach Anspruch 3, dadurch gekennzeichnet, daß die beiden Schenkel

(V₁, V₂) des V unterschiedliche Neigungen haben, wobei der weniger geneigte und der radialen Lage (22a) nähere Schenkel derjenige ist, welcher den Kontakt zur Bremsmomentübertragung beim Bremsen in der üblichen Richtung, beispielsweise für ein vorwärtsfahrendes Fahrzeug, bildet.

5. Mehrscheibenbremse nach Anspruch 3 oder 4, dadurch gekennzeichnet, daß die V-förmigen Nuten (22) in der Außenfläche der inneren Führungshülse (16) gebildet sind und die V-förmigen axialen Rippen (24) in der Innenfläche der äußeren Führungshülse (18) gebildet oder eingesetzt sind.

6. Mehrscheibenbremse nach einem der Ansprüche 3 bis 5, dadurch gekennzeichnet, daß die Rollflächen (23a, 29a, 31a, 25a) der Nuten (22) und/oder der axialen Rippen (24) aus einem Material bestehen, das an der entsprechenden Führungshülse angebracht ist und eine große Härte und/oder Abriebfestigkeit besitzt.

7. Mehrscheibenbremse nach einem der Ansprüche 3 bis 6, dadurch gekennzeichnet, daß jede Rippe (24) von einer Leiste oder einem Steg (29, 31) gebildet wird, die bzw. der in einer Nut bzw. an einer axialen Anlage (30, 32) der einen Führungshülse angebracht ist.

8. Mehrscheibenbremse nach einem der Ansprüche 3 bis 7, dadurch gekennzeichnet, daß jede Rippe (24) von einer Leiste oder einem Steg (31) gebildet ist, die bzw. der in einer wenig tiefen Nut (32) oder an einer axialen Anlage der Führungshülse angeordnet ist und in ihrer axialen Lage von zylindrischen Zapfen (33) gehalten wird, die in Bohrungen (34) der die Leiste (31) tragenden Führungshülse greifen.

9. Mehrscheibenbremse nach Anspruch 8, dadurch gekennzeichnet, daß mindestens eine elastische Unterlagscheibe (33a) um die Zapfen (33) mindestens einer der Leisten bzw. Stege (33) herum angeordnet und zwischen diese Leiste und der axialen Anlage der Führungshülse eingesetzt ist.

10. Mehrscheibenbremse nach Anspruch 1 oder 2, dadurch gekennzeichnet, daß die Führungsbahnen (38–40) eine Rollfläche (38), die an einer der Führungshülsen (18) in (gesehen im Querschnitt) tangentialer Anordnung zum kreisförmigen Umfang der Führungshülse gebildet ist, sowie eine entsprechende Rollfläche (40) aufweisen, die an einem Ring bzw. einer Buchse (41) gebildet ist, der bzw. die an der anderen Führungshülse (16) angebracht ist, und daß die Teile zur Übertragung des Bremsmomentes (42) zwischen den beiden Führungshülsen (16, 18) angeordnet ist, um diese drehfest miteinander zu verbinden, radial durch Öffnungen (46) in dem Ring (41) verlaufen und solche Abmessungen haben, daß keine Berührung zwischen den Teilen zur Übertragung des Bremsmomentes (42) und dem Ring (41) vorhanden ist.

11. Mehrscheibenbremse nach Anspruch 10, dadurch gekennzeichnet, daß die Teile zur Übertragung des Bremsmomentes aus radialen Zapfen (42) bestehen, die in einer Bohrung (43) der äußeren Führungshülse (18) angeordnet sind und mit funktionalem Spiel (j1) durch eine entsprechende axiale Nut (44) der inneren Führungshülse (16) greifen.

12. Mehrscheibenbremse nach Anspruch 11, dadurch gekennzeichnet, daß der eine der radialen Zapfen (42) in die eine der axialen Nuten (44) mit Einbauspiel (j2) greift, das größer ist als das funktionale Spiel (j1) und in dessen Inneren eine Nachstellfeder (45) angeordnet ist, die die Zapfen (42) in Anlage hält und die um einen kleinen Betrag zusammendrückbar ist, um die Berührungsspiele nachzustellen, beispielsweise bei einer Dehnung bzw. Drehrichtungsumkehr des abzubremsenden Teils.

13. Mehrscheibenbremse nach einem der Ansprüche 1 bis 12, dadurch gekennzeichnet, daß die erste Führungshülse (16) an dem Flansch (15) der ersten Bremsscheibe (1) seitlich befestigt und im Inneren der zweiten Führungshülse (18) angeordnet ist, welche mit der zweiten Bremsscheibe (2) einteilig ausgebildet ist.

14. Mehrscheibenbremse nach einem der Ansprüche 1 bis 13, dadurch gekennzeichnet, daß das Ende der zweiten Führungshülse (18) auf der der zweiten Bremsscheibe (2) gegenüberliegenden Seite durch ein erstes biegsames und im wesentlichen dichtes ringförmiges Teil, beispielsweise eine erste Membran (19), mit der ersten Bremsscheibe (1) verbunden ist, während das Ende der ersten Führungshülse (16) auf der ersten Bremsscheibe (1) gegenüberliegenden Seite durch ein zweites biegsames und im wesentlichen dichtes ringförmiges Teil, beispielsweise eine zweite Membran (20), mit der zweiten Bremsscheibe (2) verbunden ist, derart, daß die zusammenwirkenden Flächen der beiden Führungshülsen (16, 18) gegen eine Verschmutzung von außen geschützt sind.

15. Mehrscheibenbremse nach Anspruch 14, dadurch gekennzeichnet, daß das zweite biegsame ringförmige Teil (20) gegen Erschütterungen geschützt ist durch eine widerstandsfähige ringförmige Umhüllung (16b) mit umgebogenem Rand (16c), beispielsweise aus Tiefziehblech.

EP 0 266 262 B1

FIG.1

EP 0 266 262 B1

FIG. 3

FIG. 2

EP 0 266 262 B1

**FIG.4**

**FIG.5**